(19) Europäisches Patentamt European Patent Office Office européen des brevets

(11) **EP 4 557 758 A1**

(12) **EUROPEAN PATENT APPLICATION**

(43) Date of publication:
**21.05.2025  Bulletin 2025/21**

(21) Application number: **24211066.6**

(22) Date of filing: **06.11.2024**

(51) International Patent Classification (IPC):
**H04N 23/695** (2023.01)

(52) Cooperative Patent Classification (CPC):
**H04N 23/695; G06T 7/00; G06V 10/00; G06V 40/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.11.2023  JP 2023193852**

(71) Applicant: **CANON KABUSHIKI KAISHA**
**Tokyo 146-8501 (JP)**

(72) Inventors:
• **NAITO, Ryosuke**
  **Tokyo, 146-8501 (JP)**
• **KOSUGE, Akira**
  **Tokyo, 146-8501 (JP)**

(74) Representative: **TBK**
**Bavariaring 4-6**
**80336 München (DE)**

(54) **IMAGE PROCESSING FOR TRACKING OBJECT**

(57) An apparatus identifies an object based on a predicted position of the object based on first frames in a first period and a position of the object in a target frame, identifies an object based on a predicted position of the object based on second frames in a second period and a position of the object in the target frame, and, in a case where objects are detected in the target frame, executes tracking of a tracking target object based on distances between the objects, and at least one of an identification result of the object based on a detected position of the object and the predicted position based on the first frames and an identification result of the object based on the detected position and the predicted position based on the second frames. The second period is longer than the first period.

# F I G. 1

**Description**

BACKGROUND OF THE INVENTION

Field of the Invention

The present invention relates to a tracking object selection technique.

Description of the Related Art

A technique of detecting, from a captured image, an object to be tracked (to be referred to as a tracking object hereinafter) that is designated by a user, tracking the object, and capturing an image of the object is generally known in a camera called a PTZ camera capable of adjusting the pan, tilt, and zoom. According to the tracking technique, the pan, tilt, and zoom are automatically controlled to keep capturing a tracking object in a target image capturing composition. At this time, even if the tracking object moves, tracking/image capturing is possible by keeping determining that the tracking object after the move is the same as the tracking object before the move. Japanese Patent Laid-Open No. 2023-28908 discloses a method of specifying the same tracking object across successive frames, and keeping tracking it.

The tracking technique suffers a so-called transfer problem in which when a tracking object crosses another object, the other object is erroneously determined as the tracking object. If the transfer occurs, an image of the object different from the original tracking object is captured, and image capturing cannot be continued any more.

SUMMARY OF THE INVENTION

The present invention provides a technique for reducing a tracking object determination error even in a situation in which a tracking object crosses another object and a transfer readily occurs.

The present invention in its first aspect provides an image processing apparatus as specified in claims 1 to 12.

The present invention in its second aspect provides an image processing method as specified in claim 13.

The present invention in its third aspect provides a computer-readable storage medium as specified in claim 14.

The present invention in its fourth aspect provides a system as specified in claim 15.

Further features of the present invention will become apparent from the following description of exemplary embodiments with reference to the attached drawings.

BRIEF DESCRIPTION OF THE DRAWINGS

Fig. 1 is a view showing an example of the configuration of a system;
Fig. 2 is a block diagram showing an example of the hardware configurations of a camera 100 and a controller 200;
Fig. 3 is a block diagram showing an example of software configurations in the camera 100 and the controller 200;
Fig. 4A is a flowchart showing the operation of the camera 100;
Fig. 4B is a flowchart showing the operation of the controller 200;
Fig. 5A is a view showing a display example of a captured image and a detection result;
Fig. 5B is a view showing a state in which a tracking object is selected;
Fig. 6A is a flowchart showing details of processing in step S103;
Fig. 6B is a flowchart showing details of processing in step S107;
Fig. 7A is a graph for explaining processing in step S301;
Fig. 7B is a graph for explaining processing in step S302;
Fig. 8A is a graph for explaining processing in step S303;
Fig. 8B is a graph for explaining processing in step S303;
Fig. 9A is a flowchart showing details of processing in step S103;
Fig. 9B is a flowchart showing details of processing in step S107;
Fig. 10 is a graph for explaining processing in step S402; and
Fig. 11 is a graph for explaining processing in step S403.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

(First Embodiment)

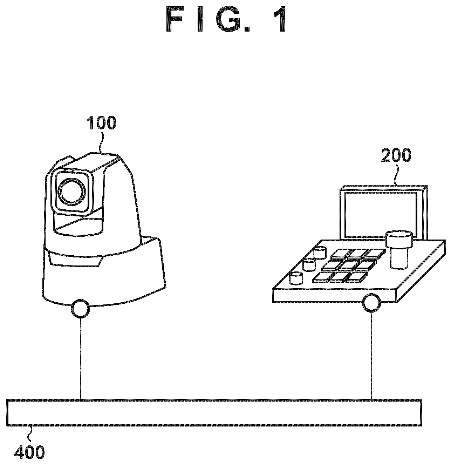

As shown in Fig. 1, a system according to the first embodiment includes a camera 100, and a controller 200 serving as the control apparatus of the camera 100. The camera 100 and the controller 200 are connected to a network 400. The system according to this embodiment is configured to perform data communication between the camera 100 and the controller 200 via the network 400. The network 400 includes networks such as a Local Area Network (LAN) and the Internet.

<Description of Each Apparatus>

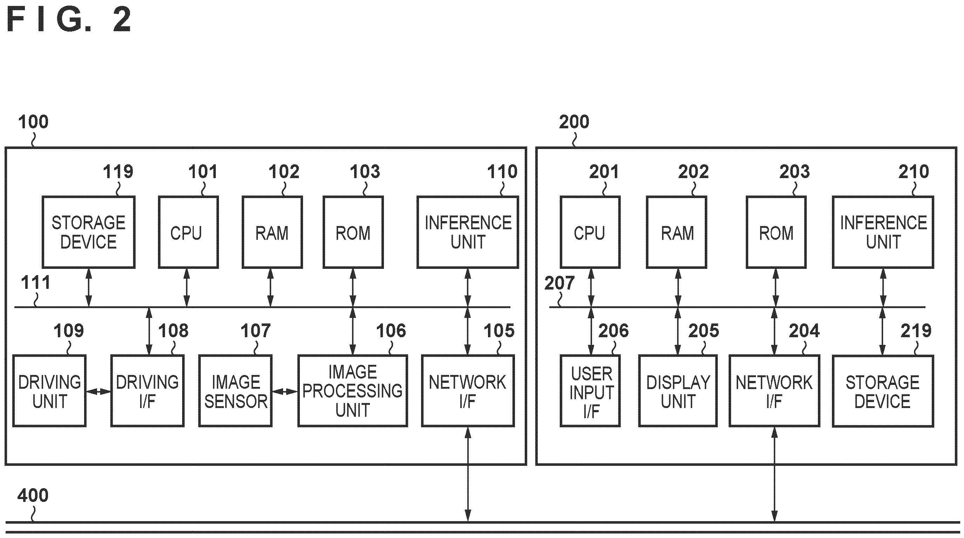

Next, an example of the hardware configurations of the camera 100 and the controller 200 will be described with reference to the block diagram of Fig. 2. Note that the configuration shown in Fig. 2 is merely an example of the hardware configurations of the camera 100 and the controller 200, and can be properly changed/modified.

First, an example of the hardware configuration of the camera 100 will be explained. The camera 100 has a mechanism capable of a pan/tilt operation to change the image capturing direction by pivoting the camera 100. The camera 100 detects an object from a captured image, and changes the image capturing direction based on the detection result.

A CPU 101 executes various processes using computer programs and data stored in a RAM 102. The CPU 101 controls the overall operation of the camera 100, and executes or controls various processes explained as processes to be performed by the camera 100.

The RAM 102 is a high-speed storage device such as a DRAM. The RAM 102 has an area for storing computer programs and data loaded from a ROM 103 and a storage device 119, and an area for storing captured images output from an image processing unit 106. Further, the RAM 102 has an area for storing various kinds of information received from the controller 200 via a network I/F 105, and a work area used when the CPU 101 and an inference unit 110 execute various processes. In this manner, the RAM 102 can properly provide various areas.

The ROM 103 stores setting data of the camera 100, computer programs and data regarding activation of the camera 100, computer programs and data regarding the basic operation of the camera 100, and the like. The ROM 103 stores even computer programs and data for causing the CPU 101 and the inference unit 110 to execute or control various processes described as processes to be performed by the camera 100.

The network I/F 105 is an interface for connecting to the network 400, and performs communication with an external device such as the controller 200 via a communication medium such as Ethernet®. Note that a serial communication I/F may be separately prepared and used for communication.

The image processing unit 106 converts a video signal output from an image sensor 107 into an captured image as data of a predetermined format, if necessary, compresses the captured image generated by the conversion, and then outputs it to the RAM 102. Note that the image processing unit 106 may perform, on a video represented by the video signal obtained from the image sensor 107, various processes such as image quality adjustment including color correction, exposure correction, and sharpness correction, and crop processing of cropping an image into only a predetermined region. These processes may be executed in accordance with an instruction received from the controller 200 via the network I/F 105.

The image sensor 107 receives light reflected by an object, converts the brightness and color of the received light into charges, and outputs a video signal based on the conversion result. As the image sensor 107, for example, a photodiode, a Charge Coupled Device (CCD) sensor, or a Complementary Metal Oxide Semiconductor (CMOS) sensor is available.

A driving I/F 108 is an interface for transmitting/receiving an instruction signal such as a control signal between the driving I/F 108 and a driving unit 109. The driving unit 109 is a pivoting mechanism for changing the image capturing direction of the camera 100, and includes a mechanical driving system, a driving source motor, and the like. In accordance with an instruction received from the CPU 101 via the driving I/F 108, the driving unit 109 performs a pan/tilt operation for horizontally and vertically changing the image capturing direction, and a zoom operation for optically changing the angle of view of image capturing.

The inference unit 110 performs inference processing for inferring the presence/absence and position of an object and the like from a captured image. The inference unit 110 is, for example, an arithmetic device such as a Graphics Processing Unit (GPU) specialized in image processing and inference processing. A GPU is generally effective for use in inference processing, but a similar function may be implemented by a reconfigurable logic circuit such as a Field Programmable Gate Array (FPGA). Processing of the inference unit 110 may be performed by the CPU 101.

A storage device 119 is a nonvolatile storage device such as a flash memory, an HDD, an SSD, or an SD card, and stores computer programs such as an OS and data. The storage device 119 is also used as a storage area for various short-term data. The storage device 119 may store some or all of computer programs and data described to be stored in the ROM 103.

All the CPU 101, the RAM 102, the ROM 103, the network I/F 105, the image processing unit 106, the driving I/F 108, the inference unit 110, and the storage device 119 are connected to a system bus 111.

Next, the controller 200 will be explained. The controller 200 can receive a captured image or a detection result transmitted from the camera 100 via the local network 400, and transmit a tracking object selection result based on a user operation to the camera 100. With this system, the user can use the controller 200 to select a tracking object, and use the camera 100 to track the selected tracking object and capture its image.

A CPU 201 executes various processes using computer programs and data stored in a RAM 202. The CPU 201 controls the overall operation of the controller 200, and executes or controls various processes explained as processes to be performed by the controller 200.

The RAM 202 is a high-speed storage device such as a DRAM. The RAM 202 has an area for storing computer programs and data loaded from a ROM 203 and a storage device 219, and an area for storing various data received from the camera 100 via a network I/F 204. Further, the RAM 202 has a work area used when the CPU 201 and an inference unit 210 execute various processes. In this way, the RAM 202 can properly provide various areas.

The ROM 203 stores setting data of the controller 200, computer programs and data regarding activation of the controller 200, computer programs and data regarding the basic operation of the controller 200, and the like.

The inference unit 210 performs inference processing for inferring the presence/absence and position of an object and the like from a captured image. The inference unit 210 is, for example, an arithmetic device such as a Graphics Processing Unit (GPU) specialized in image processing and inference processing. A GPU is generally effective for use in inference processing, but a similar function may be implemented by a reconfigurable logic circuit such as a Field Programmable Gate Array (FPGA). Processing of the inference unit 210 may be performed by the CPU 201.

The network I/F 204 is an interface for connecting to the network 400, and performs communication with an external device such as the camera 100 via a communication medium such as Ethernet®. For example, communication between the controller 200 and the camera 100 includes transmission of a control command to the camera 100, and reception of a captured image from the camera 100.

A display unit 205 is a display unit having a screen such as a liquid crystal screen or a touch panel screen. The display unit 205 can display a captured image and detection result received from the camera 100, the setting screen of the controller 200, and the like. In this embodiment, a case where the display unit 205 is a display unit having a touch panel screen will be explained.

Note that the present invention is not limited to a case where the controller 200 includes the display unit 205. For example, it is also possible that the display unit 205 is omitted from the controller 200, and a display device is connected to the controller 200 to display a captured image, a detection result, the setting screen of the controller 200, and the like on the display device.

A user input I/F 206 is an interface for accepting an operation from the user to the controller 200, and includes, for example, buttons, a dial, a joy stick, and a touch panel.

A storage device 219 is a nonvolatile storage device such as a flash memory, an HDD, an SSD, or an SD card. The storage device 219 stores an OS, computer programs, data, and the like for causing the CPU 201 and the inference unit 210 to execute or control various processes described as processes to be performed by the controller 200. The storage device 219 is also used as a storage area for various short-term data.

All the CPU 201, the RAM 202, the ROM 203, the inference unit 210, the storage device 219, the network I/F 204, the display unit 205, and the user input I/F 206 are connected to a system bus 207. Note that the controller 200 may be a personal computer (PC) having a mouse, a keyboard, and the like as the user input I/F 206.

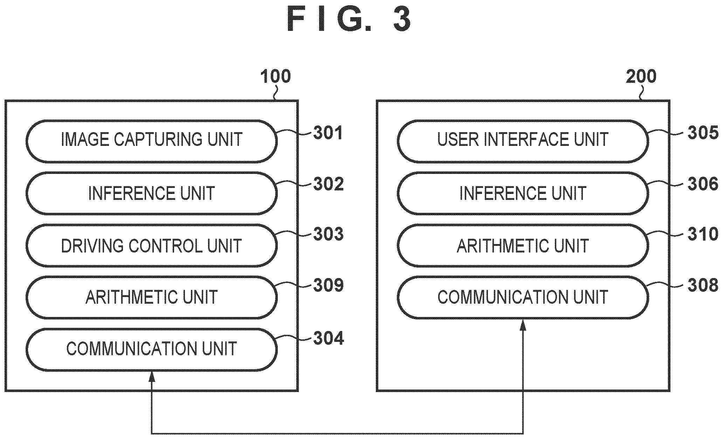

Next, an example of software configurations in the camera 100 and the controller 200 will be explained with reference to the block diagram of Fig. 3. Note that an illustration of general-purpose software such as an operating system is omitted in Fig. 3.

An image capturing unit 301, an inference unit 302, a driving control unit 303, a communication unit 304, and an arithmetic unit 309 are stored as software components in the ROM 103 of the camera 100. The CPU 101 properly deploys these software components from the ROM 103 to the RAM 102, and uses them.

The image capturing unit 301 has a software function for causing the CPU 101 to control the image processing unit 106 and obtain a captured image including an object. The inference unit 302 has a software function for causing the CPU 101 to control the inference unit 110 and detect an object from a captured image.

The driving control unit 303 has a software function for causing the CPU 101 to control the driving unit 109 and pivot the orientation of the camera 100 toward an object. The communication unit 304 has a software function for causing the CPU 101 to perform data communication between the camera 100 and the controller 200.

The arithmetic unit 309 has a software function for causing the CPU 101 to perform various arithmetic processes such as motion prediction processing, arithmetic operation accompanying control command calculation, and logical operation of branch processing.

A user interface unit 305, an inference unit 306, a communication unit 308, and an arithmetic unit 310 are stored as software components in the storage device 219 of the controller 200. The CPU 201 properly deploys these software components from the storage device 219 to the RAM 202, and uses them.

The user interface unit 305 has a software function for causing the CPU 201 to control the display unit 205 and the user input I/F 206, and display information necessary for the user or accept a user operation.

The inference unit 306 has a software function for causing the CPU 201 to control the inference unit 210 and detect an object from a captured image received from the camera 100. The communication unit 308 has a software function for causing the CPU 201 to perform data communication between the controller 200 and the camera 100.

The arithmetic unit 310 has a software function for causing the CPU 201 to perform various arithmetic processes such as motion prediction processing, arithmetic operation accompanying control command calculation, and logical operation of branch processing.

Note that the software configuration shown in Fig. 3 is merely an example. For example, one functional unit may be divided by function into a plurality of functional units, or a plurality of functional units may be integrated into one functional unit. One or more functional units shown in Fig. 3 may be implemented by hardware.

<Description of Operation of Each Apparatus>

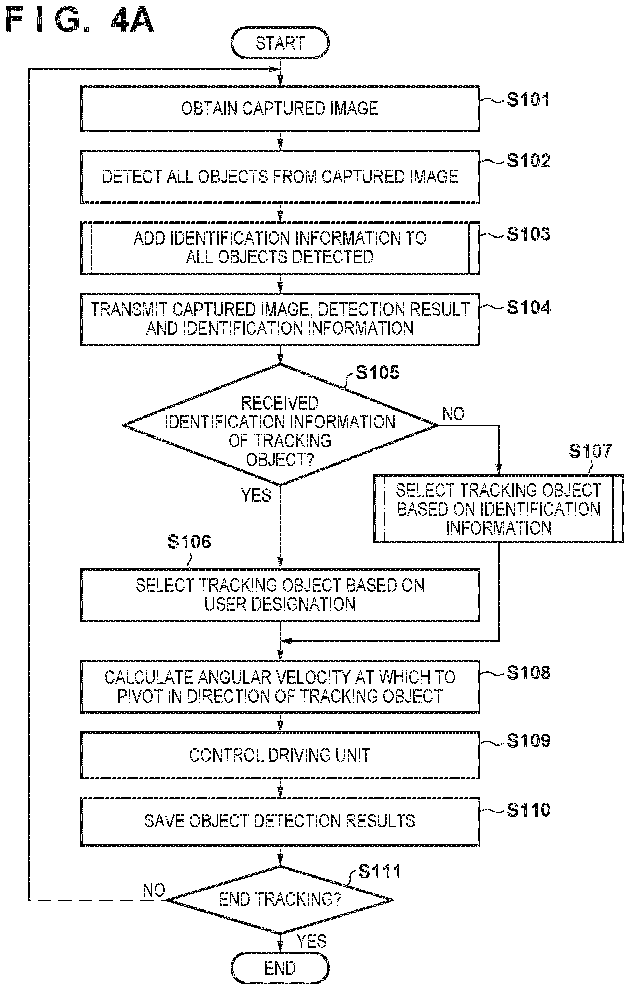

Next, the operation of each of the camera 100 and the controller 200 in the system according to this embodiment will be explained. First, the operation of the camera 100 will be explained with reference to the flowchart of Fig. 4A.

In step S101, the CPU 101 reads out the image capturing unit 301 from the ROM 103, deploys it in the RAM 102, and executes the deployed image capturing unit 301. Then, the CPU 101 obtains a captured image from the image processing unit 106 and stores it in the RAM 102.

In step S102, the CPU 101 reads out the inference unit 302 from the ROM 103, deploys it in the RAM 102, and executes the deployed inference unit 302. Then, the CPU 101 inputs, to the inference unit 110, the captured image stored in the RAM 102 in step S101, and controls the inference unit 110 to detect all objects in the captured image and store the result of detection (detection result) in the RAM 102.

At this time, the inference unit 110 reads out, from the ROM 103, a learned model created using a machine learning method such as deep learning, and deploys it in the RAM 102. The inference unit 110 inputs the captured image into the learned model, and performs arithmetic processing of the learned model, thereby detecting an object in the captured image. As the result of detection (detection result), the inference unit 110 outputs attribute information of the object such as position information, size information, and orientation information. Note that the CPU 101 may reduce the captured image, and the inference unit 110 may input the reduced captured image into the learned model. This can reduce the processing amount of the inference unit 110 and speed up inference processing.

Here, the detection result of an object in the inference unit 110 will be explained. The inference unit 110 inputs a captured image into a learned model, and performs arithmetic processing of the learned model. Then, as position information of an object in the captured image, the inference unit 110 outputs rectangle information (for example, the coordinates of upper left and lower right vertices of a rectangle) that defines the rectangle including the whole body of the object. Note that rectangle information is not limited to information representing the whole body of an object, but may be information representing part of an object such as the position of the head or face of a person object. In this case, a learned model used needs to be changed to a learned model that becomes a desired input/output. Also, position information of an object is not limited to the coordinates of upper left and lower right vertices of a rectangle including the whole body of an object, and suffices to be information capable of expressing the position of an object in a captured image such as the coordinates of the center of the rectangle or the width or height of the rectangle. As orientation information of an object, the inference unit 110 outputs an orientation in any one of four, front, rightward, back, and leftward directions. Note that the orientation of an object is not limited to such discontinuous directions, but may be continuous angles such as 0° and 90°.

Note that the method of detecting an object from a captured image by the inference unit 110 is not limited to a specific method. For example, the inference unit 110 may adopt a template matching method of registering the template image of an object in advance, and detecting a region highly similar to the template image as an object region in a captured image.

In step S103, the CPU 101 reads out the arithmetic unit 309 from the ROM 103, deploys it in the RAM 102, and executes the deployed arithmetic unit 309. Based on a motion prediction using the detection result (past detection result) stored in the RAM 102, the CPU 101 adds, to the same object as a past object detected from a captured image of a past frame among objects detected from a captured image of the present frame (current frame), the same identification information as identification information of the past object. The CPU 101 writes, in the RAM 102, the identification information added to the object detected from the captured image of the present frame. Details of the processing in step S 103 will be described later.

In step S104, the CPU 101 reads out the communication unit 304 from the ROM 103, deploys it in the RAM 102, and executes the deployed communication unit 304. Then, the CPU 101 reads out the captured image, the detection result, and the identification information from the RAM 102, and transmits the readout captured image, detection result, and identification information to the controller 200 via the network I/F 105. Note that in this embodiment, when the detection result and the captured image are not synchronized owing to the execution time of inference processing, the CPU 101 transmits the past detection result as the present detection result.

In step S105, the CPU 101 executes the arithmetic unit 309 deployed in the RAM 102. Then, the CPU 101 determines whether identification information of a tracking object has been received from the controller 200 via the network I/F 105. If the CPU 101 determines that the identification information has been received, it shifts the process to step S106. If the CPU 101 determines that no identification information has been received, it shifts the process to step S107.

In step S106, the CPU 101 executes the arithmetic unit 309 deployed in the RAM 102. Then, the CPU 101 stores, in the RAM 102, the identification information received from the controller 200 via the network I/F 105.

In step S107, the CPU 101 executes the arithmetic unit 309 deployed in the RAM 102. Then, the CPU 101 selects a tracking object based on the detection result and identification information of the object stored in the RAM 102, and writes identification information of the tracking object in the RAM 102. Details of the processing in step S 107 will be described later.

In step S108, the CPU 101 executes the arithmetic unit 309 deployed in the RAM 102. Then, the CPU 101 reads out, from the RAM 102, "position information of the tracking object (object corresponding to the identification information written in the RAM 102 in step S 106 or S 107) in the captured image of the present frame" and "position information of the tracking object in a target image capturing composition", and calculates a difference between the pieces of position information in the captured image of the present frame. Subsequently, the CPU 101 converts the difference into an angular difference viewed from the camera 100. For example, the CPU 101 approximately calculates an angle per pixel of the captured image using information of the image capturing resolution and angle of view of image capturing of the camera 100, and calculates, as an angular difference, a result of multiplying the difference by the angle. Then, the CPU 101 calculates an angular velocity in the pan/tilt direction corresponding to the calculated angular difference. For example, letting $a\_1$ be the angle of a tracking object of a present frame, $a\_2$ be the angle of the tracking object in a target image capturing composition, and g be an arbitrary velocity coefficient, the CPU 101 calculates an angular velocity $\omega$ in accordance with equation (1):

$$\omega = (a\_2 - a\_1) \times g \qquad\qquad ...(1)$$

Note that the value of the velocity coefficient may be experimentally decided, or arbitrarily set by the user via the controller 200. The calculation method of the angular velocity in the pan/tilt direction is not limited to the above-described calculation method. For example, the angular velocity in the pan/tilt direction may be calculated such that if a difference in the horizontal direction is large, the angular velocity of the pan becomes high, or if a difference in the vertical direction is large, the angular velocity of the tilt becomes high. Thereafter, the CPU 101 writes, in the RAM 102, the calculated angular velocity in the pan/tilt direction.

In step S109, the CPU 101 reads out the driving control unit 303 from the ROM 103, deploys it in the RAM 102, and executes the deployed driving control unit 303. Then, the CPU 101 derives, from the angular velocity in the pan/tilt direction read out from the RAM 102, driving parameters for pan and tilt in a desired direction at a desired speed. Here, the driving parameters are parameters for controlling motors (not shown) in the pan direction and tilt direction that are included in the driving unit 109. Subsequently, the CPU 101 controls the driving unit 109 via the driving I/F 108 based on the derived driving parameters. The driving unit 109 pivots based on the derived driving parameters, and the camera 100 changes the image capturing direction, that is, performs the pan/tilt operation.

In step S110, the CPU 101 executes the arithmetic unit 309 deployed in the RAM 102. Then, the CPU 101 writes, in the RAM 102, position information of the object in the captured image of the present frame so as to use it later as position information of the object in the past frame.

In this embodiment, detection results of up to five past frames are referred to in motion prediction processing, so the RAM 102 holds at least detection results of up to five past frames.

In step S111, the CPU 101 executes the arithmetic unit 309 deployed in the RAM 102. Then, the CPU 101 determines whether an end condition to end tracking has been satisfied. Various conditions are applicable as the end condition, and the end condition is not limited to a specific condition. The end condition is, for example, "a tracking end instruction has been received from the controller 200", "the current date and time have reached a predetermined date and time", or "a predetermined time has passed after the start of tracking".

If the CPU 101 determines that the end condition has been satisfied, it ends the processing according to the flowchart of Fig. 4A. If the CPU 101 determines that no end condition has been satisfied, it returns the process to step S101.

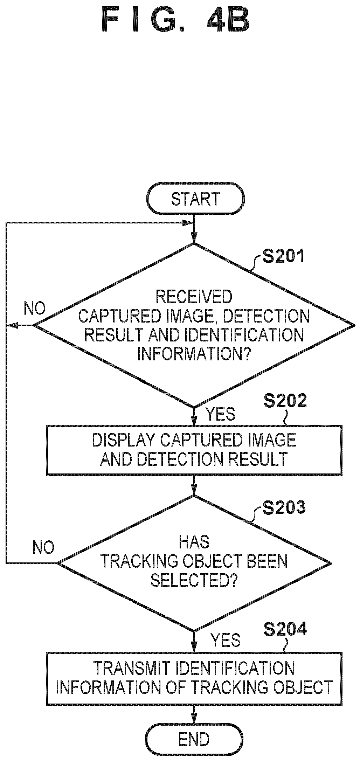

Next, the operation of the controller 200 will be explained with reference to the flowchart of Fig. 4B. In step S201, the CPU 201 reads out the arithmetic unit 310 from the ROM 203, deploys it in the RAM 202, and executes the arithmetic unit 310. Then, the CPU 201 determines whether a captured image, a detection result, and identification information have been received from the camera 100 via the network I/F 204.

If the CPU 201 determines that a captured image, a detection result, and identification information have been received from the camera 100, it stores the received captured image, detection result, and identification information in the RAM 202, and advances the process to step S202. In contrast, if the CPU 201 determines that a captured image, a detection result, and identification information have not been received from the camera 100, it returns the process to step S201.

In step S202, the CPU 201 reads out the user interface unit 305 from the ROM 203, deploys it in the RAM 202, and executes the deployed user interface unit 305. Then, the CPU 201 reads out the captured image and the detection result from the RAM 202, and displays the readout captured image and detection result on the display unit 205.

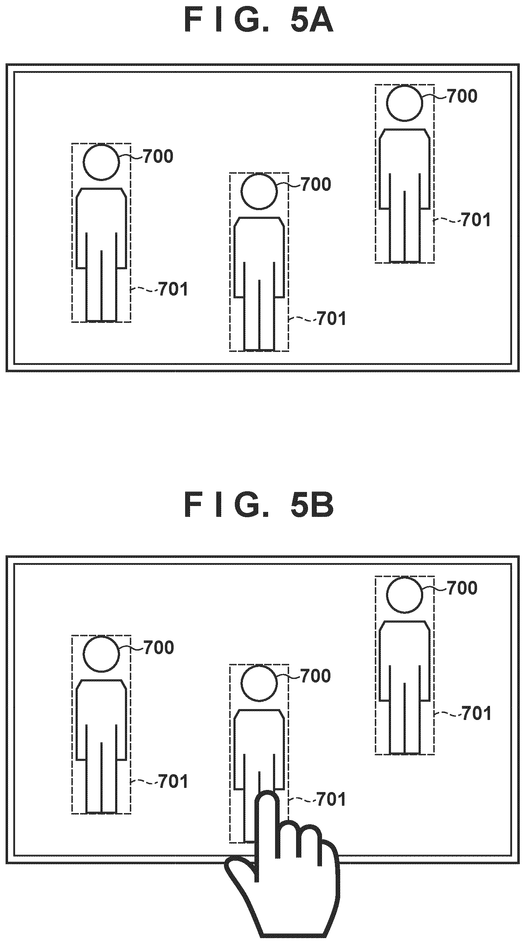

Fig. 5A shows a display example of the captured image and the detection result on the display unit 205. As shown in Fig. 5A, a captured image including objects 700 is displayed on the display screen of the display unit 205, and rectangular frames 701 each defined by rectangle information of the object 700 are superimposed and displayed as the detection result of the objects 700 on the captured image. The user checks the screen of the display unit 205 and can confirm the captured image and detection result of the camera 100.

In step S203, the CPU 201 executes the user interface unit 305 deployed in the RAM 202. Then, the CPU 201 accepts a touch operation for "tracking object selection operation" by the user to the display unit 205. Fig. 5B shows a state in which the user selects a center object as a tracking object in the display example of Fig. 5A. In Fig. 5B, the user touches the center object 700 with his/her finger, selecting the center object 700 as a tracking object. Note that the method for selecting a tracking object is not limited to a specific method. For example, the user may operate the user input I/F 206 to select a tracking object.

Then, the CPU 201 determines whether the touch operation for "tracking object selection operation" has been input. If the CPU 201 determines that the touch operation for "tracking object selection operation" has been input, it shifts the process to step S204. In contrast, if the CPU 201 determines that the touch operation for "tracking object selection operation" has not been input, it returns the process to step S201.

In step S204, the CPU 201 reads out the communication unit 308 from the ROM 203, deploys it in the RAM 202, and executes the communication unit 308. Then, the CPU 201 reads out, from pieces of identification information stored in the RAM 202, identification information of the object selected as a tracking object by the user, and transmits the readout identification information to the camera 100 via the network I/F 204.

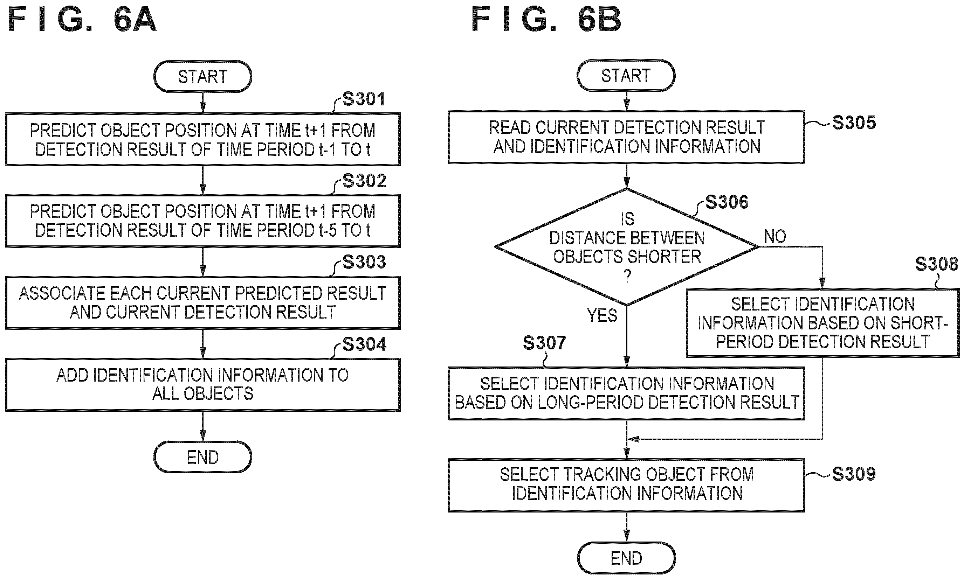

Next, details of the processing in step S103 described above will be explained with reference to the flowchart of Fig. 6A. In step S301, the CPU 101 reads out, from the RAM 102, the detection result of one preceding frame (past) and that of the present frame as "detection results of a short frame obtaining period (to be referred to as a short period hereinafter)". The CPU 101 calculates the displacement vector of the object from one preceding frame to the present frame using the detection result of one preceding frame (past) and that of the present frame. Based on the calculated displacement vector, the CPU 101 predicts the position of the object in one succeeding frame.

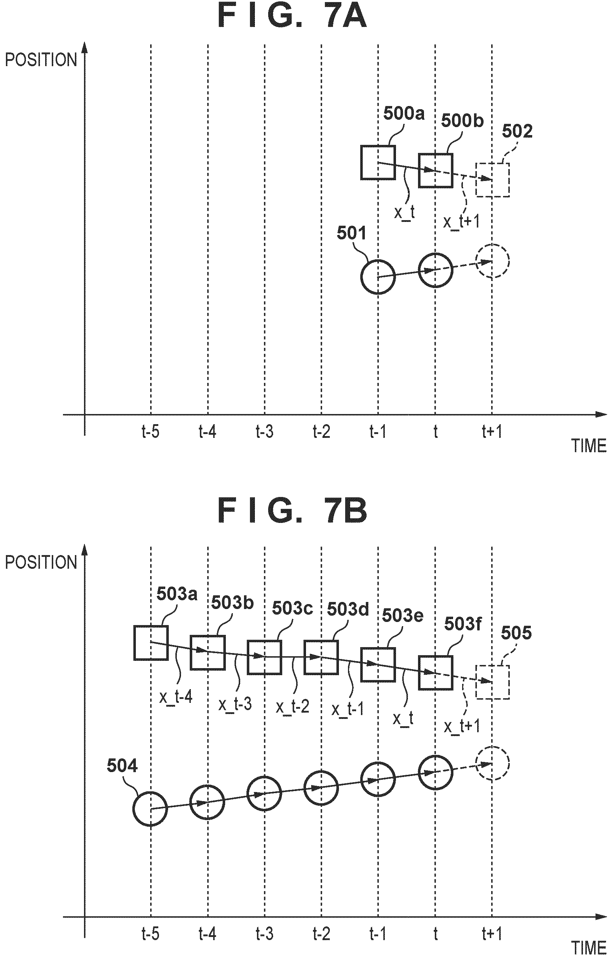

The processing in step S301 will be explained by exemplifying Fig. 7A. The abscissa of the graph in Fig. 7A represents the image capturing time (frame) of a captured image, and the ordinate represents the horizontal position (or vertical position or both of them) of each object in the captured image. A state in which objects 500 and 501 included in the captured image move every time is also represented on the graph.

An object 500a represents the object 500 in a frame (t-1), an object 500b represents the object 500 in a frame t, and an object 502 represents the object 500 in a frame (t+1).

Processing for predicting the position of the object 500 (position of the object 502) in the frame (t+1) will be explained below. To predict the position of the object 500 in the frame (t+1), first, the CPU 101 calculates a displacement vector $x\_t$ from the center position of the object 500a to that of the object 500b. Then, the CPU 101 derives a predicted displacement vector $x\_t+1$ equal in direction and magnitude to the displacement vector $x\_t$ using the center position of the object 500b as a start point. The CPU 101 obtains (predicts) the position of the end point of the derived predicted displacement vector $x\_t+1$ as the position of the object 500 (position of the object 502) in the frame (t+1). The CPU 101 writes the obtained position as a predicted position in the RAM 102. Note that the position of the object 501 in the frame (t+1) can also be predicted by a similar method.

In this way, the CPU 101 can predict the position of an object in one succeeding frame by motion prediction of a short period (first frame period). In the short-period motion prediction, only an immediately preceding detection result is reflected in prediction, so a change of a local object motion can be checked, enabling prediction of an object of a large speed change.

Note that prediction is not limited to a succeeding object position. In addition to prediction of an object position, it is also possible to calculate a rectangle area from rectangle information of an object, and predict the rectangle area of a next object-including rectangle from transition of the rectangle area. In this case, the difference between the rectangle areas of two crossing objects in a captured image can be discriminated. Even when objects at positions different in the direction of depth cross each other, matching between a prediction result and a present detection result (to be described later) becomes possible.

In addition to prediction of an object position, it is also possible to predict next attribute information of an object from transition of attribute information (for example, face orientation) of the object. Even when objects cross each other while moving in the same direction, the CPU 101 can perform matching between a prediction result and a present detection result (to be described later) based on the face orientation by referring to the position moving direction and attribute information of the objects.

In this embodiment, the face orientation is explained by four directions. If a model capable of more finely obtaining a face orientation is adopted, the difference in face orientation can be recognized more finely, implementing robust matching processing. Further, the CPU 101 may implement more robust prediction processing by cooperation between these prediction processes.

Then, in step S302, the CPU 101 reads out, from the RAM 102, detection results in five preceding frames (past) and the present frame as "detection results of a long frame obtaining period (to be referred to as a long period hereinafter)". Here, the present frame is represented as a frame t. For i = 5 to 1, the CPU 101 calculates the displacement vector of the object from a frame (t-i) to a frame (ti+1) using the readout detection results. The CPU 101 calculates a predicted displacement vector whose direction and magnitude become the average of the directions of the calculated displacement vectors and that of the magnitudes of the calculated displacement vectors. Based on the calculated predicted displacement vector, the CPU 101 predicts the position of the object in one succeeding frame.

The processing in step S302 will be explained by exemplifying Fig. 7B. The abscissa of the graph in Fig. 7B represents the image capturing time (frame) of a captured image, and the ordinate represents the horizontal position (or vertical position or both of them) of each object in the captured image. A state in which objects 503 and 504 included in the captured image move every time is also represented on the graph. An object 503a represents the object 503 in a frame (t-5), an object 503b represents the object 503 in a frame (t-4), an object 503c represents the object 503 in a frame (t-3), and an object 503d represents the object 503 in a frame (t-2). An object 503e represents the object 503 in a frame (t-1), an object 503f represents the object 503 in a frame t, and an object 505 represents the object 503 in a frame (t+1). Processing for predicting the position of the object 503 (position of the object 505) in the frame (t+1) will be explained below.

To predict the position of the object 503 in the frame (t+1), first, the CPU 101 calculates a displacement vector x_t-4 from the center position of the object 503a to that of the object 503b. Also, the CPU 101 calculates a displacement vector x_t-3 from the center position of the object 503b to that of the object 503c. The CPU 101 calculates a displacement vector x_t-2 from the center position of the object 503c to that of the object 503d. The CPU 101 calculates a displacement vector x_t-1 from the center position of the object 503d to that of the object 503e. The CPU 101 calculates a displacement vector x_t from the center position of the object 503e to that of the object 503f.

Then, the CPU 101 calculates a displacement vector x_avg whose direction and magnitude become the average of the directions of the displacement vectors x_t to x_t-4 and that of the magnitudes of the displacement vectors x_t to x_t-4.

As for the directions of the displacement vectors x_t to x_t-4, letting a_t-4 to a_t be slope angles in the vector direction for which the horizontal is 0°, a direction (slope angle) a_avg of the displacement vector x_avg is given by equation (2):

$$a\_avg = ((a\_t\text{-}4 + a\_t\text{-}3 + a\_t\text{-}2 + a\_t\text{-}1 + a\_t))/5 \qquad ...(2)$$

Letting v_t-4 to v_t be the magnitudes of the displacement vectors x_t-4 to x_t, a magnitude v_avg of the displacement vector x_avg is given by equation (3):

$$v\_avg = ((v\_t\text{-}4 + v\_t\text{-}3 + v\_t\text{-}2 + v\_t\text{-}1 + v\_t))/5 \qquad ...(3)$$

After that, the CPU 101 derives a predicted displacement vector x_t+1 equal in direction and magnitude to the displacement vector x_avg using the center position of the object 503f as a start point. The CPU 101 obtains (predicts) the position of the end point of the derived predicted displacement vector x_t+1 as the position of the object 503 (position of the object 505) in the frame (t+1). The CPU 101 writes the obtained position as a predicted position in the RAM 102. Note that the position of the object 504 in the frame (t+1) can also be predicted by a similar method.

Although a predicted displacement vector is calculated from the averages of the directions and magnitudes of displacement vectors between frames in this embodiment, the predicted displacement vector calculation method is not limited to this. For example, the direction and magnitude of a predicted displacement vector may be the average of the directions of the first and final displacement vectors (x_t-4 and x_t) and the average of the magnitudes of the first and final displacement vectors (x_t-4 and x_t) in a period in which detection results are referred to.

It is also possible to obtain optimum values of the least squares method for the direction and magnitude of a displacement vector between frames, set the optimum value of the direction as the direction of a predicted displacement vector, and set the optimum value of the magnitude as the magnitude of the predicted displacement vector. That is, the method suffices to perform an average motion prediction from long-period detection results.

In this manner, the CPU 101 can predict the position of an object in one succeeding frame from long-period motion prediction. By referring to past detection results in a long period, a change of a broad object motion can be checked. Even when crossing objects are partially shielded or objects seem to overlap, and an error is generated in the detected position of the object, the error becomes relatively small in broad movement of the object. Since a prediction less influenced by an error can be performed, the object can be identified again after crossing.

That is, this embodiment implements a system that performs more robust tracking by selectively using two different types of motion prediction under the condition of whether an object crosses, in comparison with a conventional system that performs tracking by one type of motion prediction.

Note that in this embodiment, motion predictions of a one-frame period and a five-frame period are performed respectively in steps S301 and S302. However, the number of frames in each period is not limited to this. The number of frames in each period may be experimentally decided in accordance with the degree of movement of an object in a form in which there are a plurality of motion predictions with different numbers of frames in respective periods.

In step S303, the CPU 101 reads out, from the RAM 102, the detection result of the object detected from the captured image of the present frame, the position (first predicted position) of the object predicted in step S301 for the captured image of the present frame, and the position (second predicted position) of the object predicted in step S302 for the captured image of the present frame. The CPU 101 performs matching (association) of the closest combination among the detection result, the first predicted position, and the second predicted position.

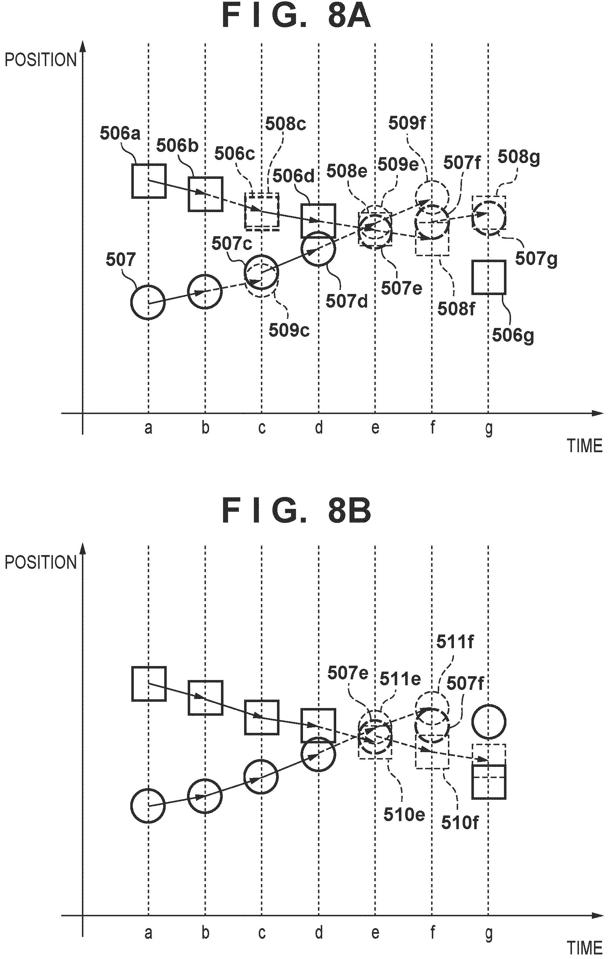

The processing in step S303 will be explained by exemplifying Figs. 8A and 8B. Fig. 8A is a graph for schematically explaining a method of matching between the detection result of an object and the motion prediction result (prediction result in step S301) of the short period (first frame period), and a process of matching when objects cross each other.

The abscissa of the graph represents the image capturing time (frame) of a captured image, and the ordinate represents the horizontal position (or vertical position or both of them) of each object in the currently captured image. A state in which objects 506 and 507 included in the captured image move every time is also represented on the graph. A position 506i represents the position of the object 506 in a frame i, and a position 507i represents the position of the object 507 in the frame i. Further, the objects 506 and 507 cross each other during movement, and the object 506 is shielded by the object 507 midway through the movement.

In the process of matching, first, the CPU 101 performs motion prediction of the object 506 in step S301, and derives a predicted position 508c of the object 506 from detected positions 506a and 506b of the object 506. As for the object 507, the CPU 101 similarly derives a predicted position 509c of the object 507 from a detected position of the object 507 in a frame a and a detected position of the object 507 in a frame b.

Then, the CPU 101 obtains, from the RAM 102, a detected position 506c of the object 506 detected from a captured image of a frame c, and a detected position 507c of the object 507 detected from the captured image of the frame c.

The CPU 101 performs matching between the detected positions 506c and 507c and the predicted positions 508c and 509c based on the similarity of the positions. The similarity of the positions is calculated by such a formula that the value becomes larger when a detected position and a predicted position are closer, and smaller when they are farther. For example, the similarity of the positions is calculated by such a formula that the value is 1 when a detected position and a predicted position coincide with each other, and 0 when they are farther by a distance corresponding to one side of the rectangle of an object. More specifically, letting p1 be a detected position, p2 be a predicted position, and L be a distance corresponding to one side of the rectangle, "similarity P of the position" between the detected position p1 and the predicted position p2 can be given by solving equation (4):

$$P = MAX(1 - |((p2 - p1)/L)|, 0) \qquad ...(4)$$

In the example of Fig. 8A, a detected position closest to the predicted position 508c is the detected position 506c, and a detected position closest to the predicted position 509c is the detected position 507c. In this case, the CPU 101 matches (associates) the predicted position 508c and the detected position 506c, and matches (associates) the predicted position 509c and the detected position 507c.

Although the similarity of the positions is used as the condition of matching an object of a detection result and an object of a prediction result in this embodiment, the matching condition is not limited to this. For example, instead of or in addition to the similarity of the positions, it is also possible to calculate the area of an object from rectangle information of a detection result and use the similarity between the areas of respective objects as a matching condition, or extract orientation information of an object from attribute information of a detection result and use the similarity of the orientations as a matching condition.

For example, the similarity of the areas can be calculated by such a formula that the value is 1 when areas coincide with each other, and 0 when they are apart by double the object of a detection result. More specifically, letting s1 be the object area of a detection result, and s2 be the object area of a prediction result, the similarity S of the areas is given by equation (5):

$$S = MAX(1 - |((s2 - s1)/s1)|, 0) \qquad ...(5)$$

The similarity of the orientations can be calculated by such a formula that the value is 1 when orientations coincide with each other, and 0 when they do not coincide with each other. Note that calculation processes of the respective similarities may be cooperated. For example, the average values of the similarities of the positions, areas, and orientations may be used. This can implement robust matching processing based on pieces of information.

Subsequently, the process of matching while objects cross each other will be explained. First, in step S301, the CPU 101 performs motion prediction of the object 506, and derives a predicted position 508e of the object 506 from the detected position 506c and a detected position 506d of the object 506. As for the object 507, the CPU 101 similarly derives a predicted position 509e of the object 507 from the detected position 507c and a detected position 507d of the object 507.

Then, the CPU 101 obtains, from the RAM 102, a detected position 507e of the object 507 detected from a captured image of a frame e. Since the object 506 is shielded by the object 507 in the frame e, it is not detected from the captured image of the frame e and thus the detected position of the object 506 in the frame e is not obtained.

The CPU 101 performs matching between the detected position 507e, the predicted position 508e, and the predicted position 509e based on the similarity of the positions. In the example of Fig. 8A, the objects 506 and 507 cross each other and exist close, so all the detected position 507e, the predicted position 508e, and the predicted position 509e are close, but the predicted position 508e is closer to the detected position 507e than the predicted position 509e. Hence, the CPU 101 matches (associates) the predicted position 508e and the detected position 507e.

In this manner, while objects cross, the predicted position of an object sometimes matches the detected position of an object other than the object. This is the cause of transfer of a tracking object in tracking/image capturing.

In the example of Fig. 8A, the predicted position 509e does not match any detected position, but the CPU 101 writes, in the RAM 102, the predicted position 509e as a provisional detected position of the object 507 in the frame e and uses it for the next motion prediction of the object 507. Even when the object 507 cannot be temporarily detected owing to shielding or the like, or the object 507 cannot be temporarily detected due to the performance of the inference unit, position prediction of the object can be continued. However, if prediction based on the prediction result is repeated, a predicted position error increases. It is therefore effective to set the upper limit count when executing prediction using a prediction result. In this embodiment, the upper limit of use of a prediction result as a provisional detection result is once for descriptive convenience.

Then, in step S301, the CPU 101 performs motion prediction of the object 506, and derives a predicted position 508f of the object 506 from the detected position 506d of the object 506 and the detected position 507e serving as the detected position of the object 507 in the frame e. As for the object 507, the CPU 101 similarly derives a predicted position 509f of the object 507 from the detected position 507d and predicted position 509e of the object 507.

The CPU 101 obtains, from the RAM 102, a detected position 507f of the object 507 detected from a captured image of a frame f. Since the object 506 is shielded by the object 507 even in the frame f, the object 506 is not detected from the captured image of the frame f and the detected position of the object 506 in the frame f is not obtained.

The CPU 101 performs matching between the detected position 507f, the predicted position 508f, and the predicted position 509f based on the similarity of the positions. In the example of Fig. 8A, the objects 506 and 507 cross each other and exist close, so all the detected position 507f, the predicted position 508f, and the predicted position 509f are close, but the predicted position 508f is closer to the detected position 507f than the predicted position 509f. Thus, the CPU 101 matches (associates) the predicted position 508f and the detected position 507f.

In short-period motion prediction, an immediately preceding motion is reflected in prediction. Thus, if matching is incorrect once, it is difficult to return to an original object. Since the predicted position 509f does not match any detected position and the count of "executing prediction using a prediction result" has reached the upper limit count, the predicted position 509f is not written even as a detected position and the current prediction ends.

Then, in step S301, the CPU 101 performs motion prediction of the object 507, and derives a predicted position 508g of the object 507 from the detected position 507e of the object 507 and the detected position 507f of the object 507. At this time, a detected position in the frame e and a detected position in the frame f necessary for motion prediction of the object 506 have not been obtained, so the predicted position of the object 506 cannot be obtained.

After that, the CPU 101 obtains, from the RAM 102, a detected position 506g of the object 506 and a detected position 507g of the object 507 detected from the captured image of the frame g. At this time, the crossing between the objects 506 and 507 has ended, and the detected positions of the respective objects can be obtained.

The CPU 101 performs matching between the detected position 506g, the detected position 507g, and the predicted position 508g based on the similarity of the positions. In the example of Fig. 8A, the predicted position 508g is closer to the detected position 507g than the detected position 506g. Thus, the CPU 101 matches (associates) the predicted position 508g and the detected position 507g.

Fig. 8B is a graph for schematically explaining a method of matching between the detection result of an object and the motion prediction result (prediction result in step S302) of the long period (second frame period), and a process of matching when objects cross each other.

The abscissa of the graph represents the image capturing time (frame) of a captured image, and the ordinate represents the horizontal position (or vertical position or both of them) of each object in the captured image. A state in which the objects 506 and 507 included in the captured image move every time is also represented on the graph. The position 506i represents the position of the object 506 in the frame i, and the position 507i represents the position of the object 507 in the frame i. Further, the objects 506 and 507 cross each other during movement, and the object 506 is shielded by the object 507 midway through the movement.

As for the process of matching, a basic operation is similar to the method of matching an object of a detection result and an object of a prediction result obtained from short-period motion prediction, which has been described with reference to Fig. 8A. However, as motion prediction, long-period motion prediction explained in step S302 is employed.

Next, the process of matching while objects cross each other will be explained. First, the CPU 101 performs motion prediction of the object 506 in step S302, and derives a predicted position 510e of the object 506 using detected positions of the object 506 in the frames a, b, c, and d. Note that the number of detected positions is insufficient in long-period motion prediction at this time. When the number of detected positions is insufficient, motion prediction may be executed using only the present detected position.

Similarly, in step S302, the CPU 101 performs motion prediction of the object 507, and derives a predicted position 511e of the object 507 using detected positions of the object 507 in the frames a, b, c, and d.

Then, the CPU 101 obtains, from the RAM 102, the detected position 507e of the object 507 detected from the captured image of the frame e. Since the object 506 is shielded by the object 507 in the frame e, the object 506 is not detected from the captured image of the frame e and the detected position of the object 506 in the frame e is not obtained.

The CPU 101 performs matching between the detected position 507e, the predicted position 510e, and the predicted position 511e based on the similarity of the positions. In the example of Fig. 8B, the objects 506 and 507 cross each other and exist close, so all the detected position 507e, the predicted position 510e, and the predicted position 511e are close, but the predicted position 510e is closer to the detected position 507e than the predicted position 51 1e. Hence, the CPU 101 matches (associates) the predicted position 510e and the detected position 507e. That is, similar to short-period prediction, the predicted position of the object 506 transfers to the object 507.

Then, in step S302, the CPU 101 performs motion prediction of the object 506, and derives a predicted position 510f of the object 506 using the detected positions of the object 506 in the frames a, b, c, and d and the detected position 507e.

As for the object 507, the CPU 101 similarly derives a predicted position 511f of the object 507 using the detected positions of the object 507 in the frames a, b, c, and d and the predicted position 511e.

The CPU 101 obtains, from the RAM 102, the detected position 507f of the object 507 detected from the captured image of the frame f. Since the object 506 is shielded by the object 507 in the frame f, the object 506 is not detected from the captured image of the frame f and the detected position of the object 506 in the frame f is not obtained.

The CPU 101 performs matching between the detected position 507f, the predicted position 510f, and the predicted position 511f based on the similarity of the positions. In the example of Fig. 8B, the predicted position 511f is closer to the detected position 507f than the predicted position 5 10f, unlike short-period prediction. Therefore, the CPU 101 matches (associates) the predicted position 511f and the detected position 507f. In long-period motion prediction, a past motion is reflected in prediction. Even if matching is incorrect once, the object can return to an original object.

The CPU 101 writes, in the RAM 102, the matching result (association result) between the detected position of the object and the short-period motion prediction result (predicted position), and the matching result (association result) between the detection result of the object and the long-period motion prediction result (predicted position).

In step S304, if there is the result of matching (association) between the detected position of an object detected from a captured image of a present frame and a short-period motion prediction result (predicted position), the CPU 101 adds, to the object, the same identification information as identification information of the object of the "short-period motion prediction result (predicted position)" associated with the detected position by matching. Also, if there is the result of matching (association) between the detected position of the object detected from the captured image of the present frame and a long-period motion prediction result (predicted position), the CPU 101 adds, to the object, the same identification information as identification information of the object of the "long-period motion prediction result (predicted position)" associated with the detected position by matching. The identification information suffices to be information unique to each object, and for example, an ID is applicable.

Note that if there are both the result of matching between the detected position of an object detected from a captured image of a present frame and a short-period motion prediction result, and the result of matching between the detected position of the object detected from the captured image of the present frame and a long-period motion prediction result, two pieces of identification information are added to the object detected from the captured image of the present frame. When there is a newly appearing object, uniquely decided identification information is newly added. The CPU 101 writes pieces of identification information of all objects of each frame in the RAM 102.

Next, details of the processing in step S107 described above will be explained with reference to the flowchart of Fig. 6B. In step S305, the CPU 101 reads out, from the RAM 102, the detection result of each object detected from a captured image of a present frame, and identification information written in the RAM 102 in step S304 described above.

In step S306, for each object detected from the captured image of the present frame, the CPU 101 calculates, as the position of the object, the center position of a rectangle defined by rectangle information included in the detection result of the object. The CPU 101 obtains distances between the objects using the positions of the respective objects. Then, the CPU 101 determines whether a distance smaller than a threshold exists among the obtained distances. Note that a shorter one of sides in the horizontal direction calculated from the rectangle information included in the detection result among objects at a distance to be determined is used as a reference, and the threshold is set to a value double the reference. Note that the threshold is not limited to this, and a longer one of the sides of the rectangle in the horizontal direction may be used as a reference, or a value experimentally determined in advance may also be used. That is, a value at which it is determined that objects come close to each other may be used as the threshold.

If the CPU 101 determines that a distance smaller than the threshold exists among the obtained distances, it advances the process to step S307. If the CPU 101 determines that a distance smaller than the threshold does not exist among the obtained distances, it advances the process to step S308.

Note that in this embodiment, the distance between the center coordinates of objects is used for determination of the distance, but the distance to be compared is not limited to this. Instead, prediction results may be read out from the RAM 102 to use the distance between the predicted positions of objects. In this case, even when no detection result to be compared is obtained owing to shielding by crossing, prediction results can be alternatively used to determine the distance between crossing objects.

In step S307, the CPU 101 selects identification information obtained by matching between the detection result of the object and the long-period motion prediction result (prediction result in step S302) out of the identification information read out in step S305. The CPU 101 overwrites the "identification information obtained by matching between the detection result of the object and the short-period motion prediction result (prediction result in step S301)" with the "identification information obtained by matching between the detection result of the object and the long-period motion prediction result".

As a result, identification information of an object for which the distance between objects is smaller than the threshold, that is, an object that highly likely crosses is corrected by identification information based on a long-period prediction result effective for crossing. Thereafter, the CPU 101 writes the selected identification information in the RAM 102.

In step S308, the CPU 101 selects identification information obtained by matching between the detection result of the object and the short-period motion prediction result (prediction result in step S301) out of the identification information read out in step S305. The CPU 101 overwrites the "identification information obtained by matching between the detection result of the object and the long-period motion prediction result (prediction result in step S302)" with the "identification information obtained by matching between the detection result of the object and the short-period motion prediction result". Then, the CPU 101 writes the selected identification information in the RAM 102.

Note that in steps S307 and S308, as for a newly appearing object, the CPU 101 selects newly added identification information without selection from identification information based on the prediction result of each period.

In step S309, the CPU 101 selects, as a tracking object of this time, an object having the same identification information as identification information of a previous tracking object out of the identification information selected in step S307 or S308. Then, the CPU 101 writes the identification information of the tracking object in the RAM 102, and shifts the process to step S108.

It is the feature of this embodiment that the characteristic of short-period motion prediction is exploited in a scene in which an object does not cross or when tracking an object of a large speed change, and the characteristic of long-period motion prediction is exploited when tracking an object in a scene in which the object crosses.

In this fashion, a plurality of motion predictions are performed from pieces of object information of different obtaining periods in accordance with the tendency of transfer caused by crossing. Identification information of a tracking object can be selected based on the prediction results, reducing a transfer.

In this embodiment, an example of processing has been explained in which the first predicted position of an object is calculated using the first frame group, the second predicted position of the object is calculated using the second frame group, and a tracking object is selected on the basis of the first identification result of the object based on the detected position of the object and the first predicted position, and the second identification result of the object based on the detected position and the second predicted position.

Note that when the distance between a tracking object and an object other than the tracking object is equal to or larger than the threshold, the camera 100 may select a tracking object on the basis of identification information based on short-period motion prediction, and when the distance is smaller than the threshold, select a tracking object on the basis of identification information based on long-period motion prediction.

Note that detection of an object and calculation of a driving amount for tracking are performed inside the camera 100 in this embodiment, but some or all of these processes may be executed by the controller 200. In this case, first, the camera 100 transmits a captured image to the controller 200. Then, the controller 200 detects an object from the received captured image, derives a driving parameter for tracking the tracking object, and transmits the driving parameter to the camera 100. The camera 100 captures an image of the tracking object in accordance with the received driving parameter. At this time, processing that is performed by the inference unit 110 of the camera is performed by the inference unit 210 of the controller 200. The software operations of the inference unit 302 and arithmetic unit 309 of the camera 100 are performed by the inference unit 306 and arithmetic unit 310 of the controller 200, respectively.

That is, the system may include a camera that controls to track a tracking object and capture its image, and a control apparatus that calculates the first predicted position of an object using the first frame group by the camera, calculates the second predicted position of the object using the second frame group by the camera, and selects a tracking object on the basis of the first identification result of the object based on the detected position of the object and the first predicted position, and the second identification result of the object based on the detected position and the second predicted position.

(Second Embodiment)

The difference from the first embodiment will be explained below, and the second embodiment is similar to the first embodiment, unless otherwise specified. In the second embodiment, an object is detected from an image captured by a camera 100, the above-mentioned matching is performed using a plurality of motion predictions of different cycles, and probable identification information is selected in accordance with the presence/absence of identification information based on each cycle.

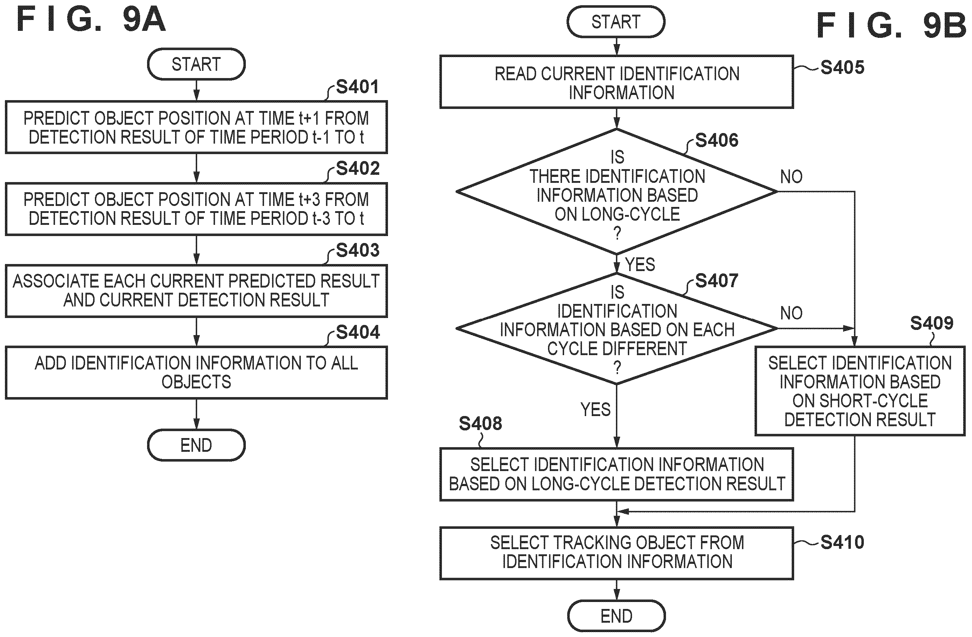

Details of processing in step S 103 according to the second embodiment will be explained with reference to the flowchart of Fig. 9A. In step S401, a CPU 101 reads out, from a RAM 102, the detection result of one preceding frame (past) and that of the present frame as "detection results of a short frame obtaining cycle (to be referred to as a short cycle hereinafter)". The "detection result of one preceding frame (past) and that of the present frame" are the detection results of frames aligned in a cycle "1". Similar to step S301 described above, the CPU 101 calculates the displacement vector of the object from one preceding frame to the present frame by using the detection result of one preceding frame (past) and that of the present frame. Then, similar to step S301 described above, the CPU 101 predicts the position of the object in one succeeding frame based on the calculated displacement vector. In short-cycle motion prediction, a detection result of a small time interval is reflected in prediction, so a change of a local object motion can be checked, enabling prediction of an object of a large speed change.

In step S402, the CPU 101 reads out, from the RAM 102, the detection result of the third preceding frame (past) and that of the present frame as "detection results of a long frame obtaining cycle (to be referred to as a long cycle hereinafter)". The "detection result of the third preceding frame (past) and that of the present frame" are the detection results of frames aligned in a cycle "3". Similar to step S301 described above, the CPU 101 calculates the displacement vector of the object from the third preceding frame to the present frame by using the detection result of the third preceding frame (past) and that of the present frame. Then, similar to step S301 described above, the CPU 101 predicts the position of the object in the third succeeding frame based on the calculated displacement vector.

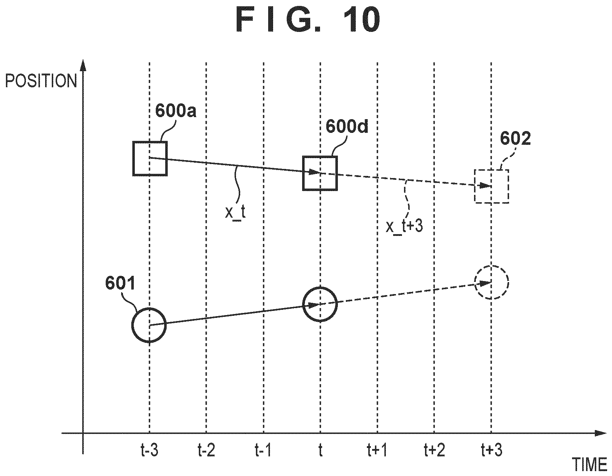

The processing in step S402 will be explained by exemplifying Fig. 10. The abscissa of the graph in Fig. 10 represents the image capturing time (frame) of a captured image, and the ordinate represents the horizontal position (or vertical position or both of them) of each object in the captured image. A state in which objects 600 and 601 included in the captured image move every time is also represented on the graph.

An object 600a represents the object 600 in a frame (t-3), an object 600b represents the object 600 in a frame t, and an object 602 represents the object 600 in a frame (t+3).

Processing for predicting the position of the object 600 in the frame (t+3) will be explained below. To predict the position of the object 600 in the frame (t+3), first, the CPU 101 calculates a displacement vector $x\_t$ from the center position of the object 600a to that of the object 600b. Then, the CPU 101 derives a predicted displacement vector $x\_{t+3}$ equal in direction and magnitude to the displacement vector $x\_t$ using the center position of the object 600b as a start point. The CPU 101 obtains (predicts) the position of the end point of the derived predicted displacement vector $x\_{t+3}$ as the position of the object 600 (position of the object 602) in the frame (t+3). The CPU 101 writes the obtained position as a predicted position in the RAM 102. Note that the position of the object 601 in the frame (t+3) can also be predicted by a similar method.

In this fashion, the CPU 101 can predict the position of an object in the third succeeding frame from long-cycle detection results. By referring to past detection results in a long cycle, a change of a broad object motion can be checked. Even when crossing objects are partially shielded or objects seem to overlap, and an error is generated in the detected position of the object, the error becomes relatively small in broad movement of the object. Since prediction less influenced by an error can be performed, the object can be identified again after crossing.

Note that in this embodiment, motion predictions of a one-frame cycle and a three-frame cycle are performed respectively in steps S401 and S402. However, the number of cycles is not limited to this. The number of cycles may be experimentally decided in accordance with the degree of movement of an object in a form in which there are a plurality of motion predictions with different numbers of cycles.

After that, in step S403, the CPU 101 reads out, from the RAM 102, the detection result of the object detected from the captured image of the present frame, the position (first predicted position) of the object predicted in step S401 for the captured image of the present frame, and the position (second predicted position) of the object predicted in step S402 for the captured image of the present frame. Similar to step S303 described above, the CPU 101 performs matching (association) of the closest combination among the detection result, the first predicted position, and the second predicted position.

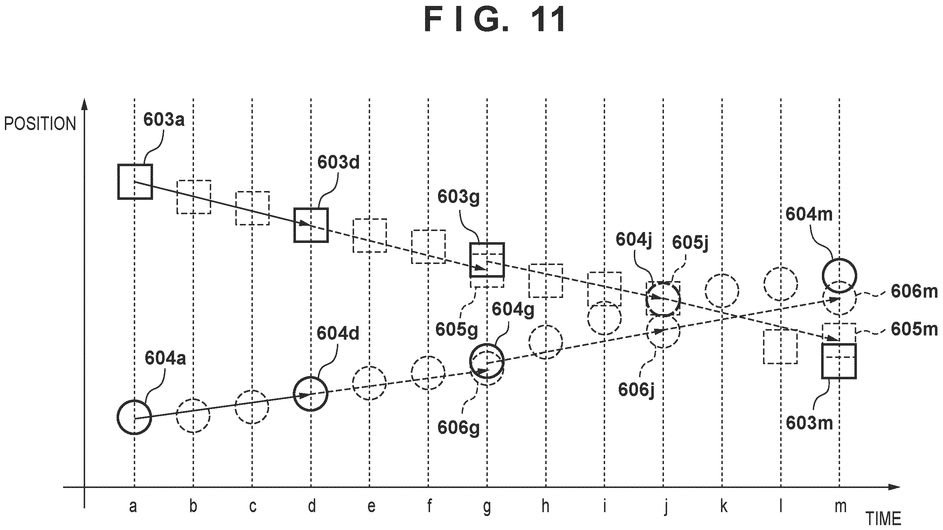

The processing in step S403 will be explained by exemplifying Fig. 11. Fig. 11 is a graph for schematically explaining a method of matching between the detection result of an object and the long-cycle motion prediction result (prediction result in step S402), and a process of matching when objects cross each other.

The abscissa of the graph represents the image capturing time (frame) of a captured image, and the ordinate represents the horizontal position (or vertical position or both of them) of each object in the captured image. A state in which objects 603 and 604 included in the captured image move every time is also represented on the graph. A position 603i represents the position of the object 603 in a frame i, and a position 604i represents the position of the object 604 in the frame i. Further, the objects 603 and 604 cross each other during movement, and the object 603 is shielded by the object 604 midway through the movement.

In the process of matching, first, the CPU 101 performs motion prediction of the object 603 in step S402, and derives a predicted position 605g from detected positions 603a and 603d of the object 603. As for the object 604, the CPU 101 similarly derives a predicted position 606g from detected positions 604a and 604d.

Then, the CPU 101 obtains, from the RAM 102, a detected position 603g of the object 603 detected from a captured image of a frame g, and a detected position 604g of the object 604 detected from the captured image of the frame g.

The CPU 101 performs matching (association) between the detected positions 603g and 604g and the predicted positions 605g and 606g based on the similarity of the positions. In the example of Fig. 11, the predicted position 605g is close to the detected position 603g, and the predicted position 606g is close to the detected position 604g. Thus, the CPU 101 matches (associates) the predicted position 605g and the detected position 603g, and matches (associates) the predicted position 606g and the detected position 604g.

Subsequently, the process of matching during crossing will be explained. First, the CPU 101 performs motion prediction of the object 603 in step S402, and derives a predicted position 605j from the detected positions 603d and 603g of the object 603. Similarly, the CPU 101 derives a predicted position 606j from the detected positions 604d and 604g of the object 604.

Then, the CPU 101 obtains, from the RAM 102, a detected position 604j of the object 604 detected from a captured image of a frame j. Since the object 603 is shielded by the object 604 in the frame j, the object 603 is not detected from the captured image of the frame j and the detected position of the object 603 in the frame j is not obtained.

The CPU 101 performs matching between the detected position 604j, the predicted position 605j, and the predicted position 606j based on the similarity of the positions. In the example of Fig. 11, the objects 603 and 604 cross each other and exist close, so all the detected position 604j, the predicted position 605j, and the predicted position 606j are close, but the predicted position 605j is closer to the detected position 604j than the predicted position 606j. Hence, the CPU 101 matches (associates) the predicted position 605j and the detected position 604j. In this manner, a transfer may occur during crossing, similar to the first embodiment.

Note that the predicted position 606j does not match any detection result at this time, but the CPU 101 writes, in the RAM 102, the predicted position 606j as a provisional detected position of the object 604 and uses it for the next motion prediction of the object 604.

Then, in step S402, the CPU 101 performs motion prediction of the object 603, and derives a predicted position 605m from the detected position 603g of the object 603 and the detected position 604j of the object 604. Similarly, the CPU 101 derives a predicted position 606m from the detected position 604g and predicted position 606j of the object 604.

The CPU 101 obtains, from the RAM 102, a detected position 603m of the object 603 and a detected position 604m of the object 604 that are detected from a captured image of a frame m. Then, the CPU 101 performs matching between the detected positions 603m and 604m and the predicted positions 605m and 606m based on the similarity of the positions. In the example of Fig. 11, the predicted position 605m is close to the detected position 603m, and the predicted position 606m is close to the detected position 604m. Therefore, the CPU 101 matches (associates) the predicted position 605m and the detected position 603m, and matches (associates) the predicted position 606m and the detected position 604m. That is, similar to the first embodiment, even if matching is incorrect once, the object can return to an original object.

The CPU 101 writes, in the RAM 102, the matching result (association result) between the detected position of the object and the short-cycle motion prediction result (predicted position), and the matching result (association result) between the detection result of the object and the long-cycle motion prediction result (predicted position).

In step S404, if there is the result of matching (association) between the detected position of an object detected from a captured image of a present frame and a short-cycle motion prediction result (predicted position), the CPU 101 adds, to the object, the same identification information as identification information of the object of the "short-cycle motion prediction result (predicted position)" associated with the detected position by matching. Also, if there is the result of matching (association) between the detected position of the object detected from the captured image of the present frame and a long-cycle motion prediction result (predicted position), the CPU 101 adds, to the object, the same identification information as identification information of the object of the "long-cycle motion prediction result (predicted position)" associated with the detected position by matching. When there is a newly appearing object, uniquely decided identification information is newly added. The CPU 101 writes pieces of identification information of all objects of each frame in the RAM 102.

Next, details of the processing in step S107 described above will be explained with reference to the flowchart of Fig. 9B. In step S405, the CPU 101 reads out, from the RAM 102, the detection result of each object detected from a captured image of a present frame, and identification information written in the RAM 102 in step S404 described above.

In step S406, the CPU 101 determines whether the "identification information obtained by matching between the detection result of the object and the long-cycle motion prediction result (prediction result in step S402)" has been read out in step S405.

If the CPU 101 determines that the "identification information obtained by matching between the detection result of the object and the long-cycle motion prediction result (prediction result in step S402)" has been read out in step S405, it advances the process to step S407. If the CPU 101 determines that the "identification information obtained by matching between the detection result of the object and the long-cycle motion prediction result (prediction result in step S402)" has not been read out in step S405, it advances the process to step S409.

In step S407, the CPU 101 determines whether the "identification information obtained by matching between the detection result of the object and the long-cycle motion prediction result" and the "identification information obtained by matching between the detection result of the object and the short-cycle motion prediction result" are equal or different.

If the CPU 101 determines that these pieces of identification information are equal, it advances the process to step S409. If the CPU 101 determines that these pieces of identification information are different, it advances the process to step S408.

In step S408, the CPU 101 selects identification information obtained by matching between the detection result of the object and the long-cycle motion prediction result (prediction result in step S402) out of the identification information read out in step S405. The CPU 101 overwrites the "identification information obtained by matching between the detection result of the object and the short-cycle motion prediction result (prediction result in step S401)" with the "identification information obtained by matching between the detection result of the object and the long-cycle motion prediction result". After that, the CPU 101 writes the selected identification information in the RAM 102.

In step S409, the CPU 101 selects identification information obtained by matching between the detection result of the object and the short-cycle motion prediction result (prediction result in step S401) out of the identification information read out in step S405. The CPU 101 overwrites the "identification information obtained by matching between the detection result of the object and the long-cycle motion prediction result (prediction result in step S402)" with the "identification information obtained by matching between the detection result of the object and the short-cycle motion prediction result". Then, the CPU 101 writes the selected identification information in the RAM 102.

Note that in steps S408 and S409, as for a newly appearing object, the CPU 101 selects newly added identification information without selection from identification information based on the prediction result of each cycle.

In step S410, the CPU 101 selects, as a tracking object of this time, an object having the same identification information as identification information of a previous tracking object out of the identification information selected in step S408 or S409. Then, the CPU 101 writes the identification information of the tracking object in the RAM 102, and shifts the process to step S108.

It is the feature of this embodiment that the characteristic of short-cycle motion prediction is exploited in a scene in which an object does not cross or when tracking an object of a large speed change, and the characteristic of long-cycle motion prediction is exploited when tracking an object in a scene in which the object crosses.

In this way, a plurality of motion predictions are performed from pieces of object information of different obtaining cycles in accordance with the tendency of transfer caused by crossing. Identification information of a tracking object is selected based on the prediction results, obtaining the same effects as those of the first embodiment.

**EP 4 557 758 A1**

The numerical values, processing timings, processing order, processing entity, data (information) obtaining method/transmission destination/transmission source/storage location, and the like are merely an example for concrete descriptions, and it is not intended to limit the present invention to such an example.

Also, part or all of the above-described embodiments may be appropriately combined and used. Part or all of the above-described embodiments may be selectively used.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus **characterized by** comprising:

   first identification means for identifying an object on the basis of a predicted position of the object based on a first frame group in a first frame period, and a position of the object in a target frame;
   second identification means for identifying an object on the basis of a predicted position of the object based on a second frame group in a second frame period, and a position of the object in the target frame; and
   control means for, in a case where a plurality of objects are detected in the target frame, executing tracking of a tracking target object on the basis of distances between the plurality of objects, and at least one identification result out of a first identification result of the object based on a detected position of the object and the predicted position of the object based on the first frame group, and a second identification result of the object based on the detected position and the predicted position of the object based on the second frame group, and

   **characterized in that** the second frame period is longer than the first frame period.

2. The apparatus according to claim 1, **characterized in that** the first identification means adds, to the object in the target frame, identification information of the object at a predicted position closest to the position of the object in the target frame out of predicted positions of the object based on the first frame group.

3. The apparatus according to claim 1, **characterized in that** the second identification means adds, to the object in the target frame, identification information of the object at a predicted position closest to the position of the object in the target frame out of predicted positions of the object based on the second frame group.

4. The apparatus according to claim 1, **characterized in that** the first identification means and the second identification means identify the object on the basis of a detected area and predicted area of the object.

5. The apparatus according to claim 1, **characterized in that** the first identification means and the second identification means identify the object on the basis of a detected orientation and predicted orientation of the object.

16

6. The apparatus according to claim 1, **characterized in that** in a case where a distance between objects smaller than a threshold does not exist in the target frame, the control means selects a tracking target object from objects in the target frame on the basis of the first identification result, and executes tracking, and **characterized in that** in a case where a distance between objects smaller than a threshold exists in the target frame, the control means selects a tracking target object from objects in the target frame on the basis of the second identification result, and executes tracking.

7. The apparatus according to claim 1, **characterized in that** in a case where a distance between the tracking target object and an object other than the tracking target object is not smaller than a threshold, the control means selects a tracking target object from objects in the target frame on the basis of the first identification result and executes tracking, and in a case where the distance is smaller than the threshold, selects a tracking target object from objects in the target frame on the basis of the second identification result and executes tracking.

8. The apparatus according to claim 1, **characterized in that** the first identification means calculates a predicted position of an object in a frame of every first cycle using frames aligned in the first cycle, and the second identification means calculates a predicted position of an object in a frame of every second cycle using frames aligned in the second cycle longer than the first cycle.

9. The apparatus according to claim 8, **characterized in that** in a case where the second identification result has not been obtained, the control means selects a tracking target object on the basis of the first identification result.

10. The apparatus according to claim 8, **characterized in that** in a case where the first identification result and the second identification result are equal, the control means selects a tracking target object on the basis of the first identification result.

11. The apparatus according to claim 8, **characterized in that** in a case where the first identification result and the second identification result are different, the control means selects a tracking target object on the basis of the second identification result.

12. The apparatus according to claim 1, **characterized in that** in a case where identification information of a tracking target object is received from an external apparatus, the control means selects an object corresponding to the identification information as a tracking target object.

13. An image processing method performed by an image processing apparatus, the method **characterized by** comprising:

identifying an object on the basis of a predicted position of the object based on a first frame group in a first frame period, and a position of the object in a target frame;
identifying an object on the basis of a predicted position of the object based on a second frame group in a second frame period, and a position of the object in the target frame; and
in a case where a plurality of objects are detected in the target frame, executing tracking of a tracking target object on the basis of distances between the plurality of objects, and at least one identification result out of a first identification result of the object based on a detected position of the object and the predicted position of the object based on the first frame group, and a second identification result of the object based on the detected position and the predicted position of the object based on the second frame group, and

**characterized in that** the second frame period is longer than the first frame period.

14. A computer-readable storage medium storing a computer program for causing a computer to function as:

first identification means for identifying an object on the basis of a predicted position of the object based on a first frame group in a first frame period, and a position of the object in a target frame;
second identification means for identifying an object on the basis of a predicted position of the object based on a second frame group in a second frame period, and a position of the object in the target frame; and
control means for, in a case where a plurality of objects are detected in the target frame, executing tracking of a tracking target object on the basis of distances between the plurality of objects, and at least one identification result out of a first identification result of the object based on a detected position of the object and the predicted position of the object based on the first frame group, and a second identification result of the object based on the detected position and the predicted position of the object based on the second frame group, and

**characterized in that** the second frame period is longer than the first frame period.

15. A system comprising a camera and a control apparatus, the camera **characterized by** comprising:

image capturing means;
control means for controlling to track a tracking object and capture an image of the tracking object, and
the control apparatus **characterized by** comprising:

first identification means for identifying an object on the basis of a predicted position of the object based on a first frame group in a first frame period, and a position of the object in a target frame;
second identification means for identifying an object on the basis of a predicted position of the object based on a second frame group in a second frame period, and a position of the object in the target frame; and
control means for, in a case where a plurality of objects are detected in the target frame, executing tracking of a tracking target object on the basis of distances between the plurality of objects, and at least one identification result out of a first identification result of the object based on a detected position of the object and the predicted position of the object based on the first frame group, and a second identification result of the object based on the detected position and the predicted position of the object based on the second frame group, and

**characterized in that** the second frame period is longer than the first frame period.

# F I G. 1

# F I G. 2

# F I G. 3

EP 4 557 758 A1

**100**

- IMAGE CAPTURING UNIT — 301
- INFERENCE UNIT — 302
- DRIVING CONTROL UNIT — 303
- ARITHMETIC UNIT — 309
- COMMUNICATION UNIT — 304

**200**

- USER INTERFACE UNIT — 305
- INFERENCE UNIT — 306
- ARITHMETIC UNIT — 310
- COMMUNICATION UNIT — 308

# F I G. 4A

START

OBTAIN CAPTURED IMAGE ～S101

DETECT ALL OBJECTS FROM CAPTURED IMAGE ～S102

ADD IDENTIFICATION INFORMATION TO ALL OBJECTS DETECTED ～S103

TRANSMIT CAPTURED IMAGE, DETECTION RESULT AND IDENTIFICATION INFORMATION ～S104

S105
RECEIVED IDENTIFICATION INFORMATION OF TRACKING OBJECT?

NO → SELECT TRACKING OBJECT BASED ON IDENTIFICATION INFORMATION ～S107

YES

S106
SELECT TRACKING OBJECT BASED ON USER DESIGNATION

CALCULATE ANGULAR VELOCITY AT WHICH TO PIVOT IN DIRECTION OF TRACKING OBJECT ～S108

CONTROL DRIVING UNIT ～S109

SAVE OBJECT DETECTION RESULTS ～S110

S111
NO ← END TRACKING?

YES

END

# F I G. 4B

START

S201

RECEIVED
CAPTURED IMAGE, DETECTION
RESULT AND IDENTIFICATION
INFORMATION?

NO

YES S202

DISPLAY CAPTURED IMAGE
AND DETECTION RESULT

S203

HAS
TRACKING OBJECT BEEN
SELECTED?

NO

YES S204

TRANSMIT IDENTIFICATION
INFORMATION OF TRACKING OBJECT

END

# F I G. 5A

# F I G. 5B

# FIG. 6A

START

PREDICT OBJECT POSITION AT TIME t+1 FROM DETECTION RESULT OF TIME PERIOD t-1 TO t — S301

PREDICT OBJECT POSITION AT TIME t+1 FROM DETECTION RESULT OF TIME PERIOD t-5 TO t — S302

ASSOCIATE EACH CURRENT PREDICTED RESULT AND CURRENT DETECTION RESULT — S303

ADD IDENTIFICATION INFORMATION TO ALL OBJECTS — S304

END

# FIG. 6B

START

READ CURRENT DETECTION RESULT AND IDENTIFICATION INFORMATION — S305

IS DISTANCE BETWEEN OBJECTS SHORTER ? — S306

NO

YES

SELECT IDENTIFICATION INFORMATION BASED ON SHORT-PERIOD DETECTION RESULT — S308

SELECT IDENTIFICATION INFORMATION BASED ON LONG-PERIOD DETECTION RESULT — S307

SELECT TRACKING OBJECT FROM IDENTIFICATION INFORMATION — S309

END

EP 4 557 758 A1

# FIG. 7A

# FIG. 7B

# F I G. 8A

# F I G. 8B

# FIG. 9A

START

**PREDICT OBJECT POSITION AT TIME t+1 FROM DETECTION RESULT OF TIME PERIOD t-1 TO t** — S401

**PREDICT OBJECT POSITION AT TIME t+3 FROM DETECTION RESULT OF TIME PERIOD t-3 TO t** — S402

**ASSOCIATE EACH CURRENT PREDICTED RESULT AND CURRENT DETECTION RESULT** — S403

**ADD IDENTIFICATION INFORMATION TO ALL OBJECTS** — S404

END

# FIG. 9B

START

**READ CURRENT IDENTIFICATION INFORMATION** — S405

IS THERE IDENTIFICATION INFORMATION BASED ON LONG-CYCLE ? — S406 — NO

YES

IS IDENTIFICATION INFORMATION BASED ON EACH CYCLE DIFFERENT ? — S407 — NO

S409 — **SELECT IDENTIFICATION INFORMATION BASED ON SHORT-CYCLE DETECTION RESULT**

YES

S408 — **SELECT IDENTIFICATION INFORMATION BASED ON LONG-CYCLE DETECTION RESULT**

**SELECT TRACKING OBJECT FROM IDENTIFICATION INFORMATION** — S410

END

EP 4 557 758 A1

# F I G. 10

POSITION

600a

600d

602

x_t

x_t+3

601

t-3　t-2　t-1　t　t+1　t+2　t+3

TIME

# FIG. 11

Europäisches
Patentamt
European
Patent Office
Office européen
des brevets

# EUROPEAN SEARCH REPORT

**Application Number**

EP 24 21 1066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AU 2018 282 419 A1 (CANON KK [JP]) 9 July 2020 (2020-07-09) | 1-5,8-15 | INV. H04N23/695 |
| Y | * the whole document * | 2,3 | |
| A | | 6,7 | |
| | - - - - - | | |
| Y | US 2011/081043 A1 (SABOL BRUCE M [US] ET AL) 7 April 2011 (2011-04-07) * abstract * * paragraph [0053] * | 2,3 | |
| | - - - - - | | |

**TECHNICAL FIELDS SEARCHED (IPC)**

H04N
G06T
G06V

The present search report has been drawn up for all claims

| Place of search | Date of completion of the search | Examiner |
|---|---|---|
| The Hague | 28 March 2025 | Mao, Pauline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

Europäisches
Patentamt

European
Patent Office

Office européen
des brevets

**Application Number**

EP 24 21 1066

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 24 21 1066

The Search Division considers that the present European patent application does not comply with the requirements of unity of invention and relates to several inventions or groups of inventions, namely:

1. claims: 1-15

    Image processing for tracking objects, using position predictions with different prediction periods, correcting tracking failure when the tracking target object crosses another object

1.1. claims: 1-7, 12-15

    Image processing for tracking objects, using position predictions with different prediction periods, correcting tracking failure when the tracking target object crosses another object based on the distances between detected objects.

1.2. claims: 8-11

    Image processing for tracking objects, using position predictions with different prediction periods, correcting tracking failure when the tracking target object crosses another object, in accordance with the presence/absence of identification information based on each cycle.
    - - -

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 24 21 1066

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2025

| Patent document cited in search report | Publication date | Patent family member(s) | Publication date |
|---|---|---|---|
| AU 2018282419 A1 | 09-07-2020 | NONE | |
| US 2011081043 A1 | 07-04-2011 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023028908 A